# EUROPEAN PATENT APPLICATION

(11) **EP 3 671 147 A1**
(43) Date of publication of application: **24.06.2020**
(21) Application number: 18215229.8
(22) Date of filing: 21.12.2018
(51) Int. Cl.: G01J 3/02, G01J 3/443, G01N 21/71

(54) **APPARATUS FOR DEPTH-RESOLVED HYPERSPECTRAL IMGAGING**

(71) Applicant: IMEC vzw, 3001 Leuven (BE)
(72) Inventor: Yurt, Abdulkadir, 3001 Leuven (BE); Lambrechts, Andy, 3001 Leuven (BE); Tack, Klaas, 3001 Leuven (BE)
(74) Representative: Roth, Sebastian

(57) **Abstract**

The present invention relates to the field of Hyperspectral Imaging (HSI). In particular, the invention proposes an apparatus (10) for performing depth-resolved HSI and a corresponding method. The apparatus includes an optical system, which is configured to receive electromagnetic radiation. Thereby, it is configured to set at least one determined focus distance (12) with a lens (20), to block received out-of-focus radiation and to pass received in-focus radiation (14) with an aperture mask (21). Further, the apparatus includes a HSI sensor, which is configured to produce a hyperspectral image based on the in-focus radiation (14) passed by the optical system.

## Description

### TECHNICAL FIELD

The present invention relates to the field of Hyperspectral Imaging (HSI). In particular, the invention proposes an apparatus for performing depth-resolved HSI and a corresponding method. The depth-resolved HSI provides a plurality of hyperspectral images, wherein each hyperspectral image resolves two spatial dimensions (width, height) and the plurality of hyperspectral images together resolve the third spatial dimension (depth). The HSI apparatus and method of the present invention can advantageously be used for monitoring and diagnostic purposes, for example, for process monitoring and tool diagnostics.

### BACKGROUND OF THE INVENTION

Diagnostic and monitoring methods, which utilize light emission, are well-established, especially in the semiconductor industry. Such methods are for instance used for characterizing and controlling the many steps in a semiconductor fabrication process. For example, the light emission of a process discharge in a process chamber, specifically a plasma chamber, may be analyzed.

For many process steps, an accurate measurements of the relative distribution of the atomic and molecular concentration in a process chamber is critical, in order to optimize the process parameters, as well as to reduce the variability between multi-chamber tools in use. For example, it has been reported in literature that there is a strong correlation between the yield of a plasma process and the spatial variation of the plasma parameters for a given instrument. It is also evident that reducing the variability between different instruments, which target identical recipes for a given process, is critical to improve the yield during production ramp up. Therefore, advancing spectral measurement techniques, e.g. for plasma discharge, plays a critical role in improving the semiconductor processes.

Among different exemplary techniques, Optical Emission Spectroscopy (OES) is popular for estimating the concentration of plasma content through measuring the spectral content (wavelength) of the light emitted from the plasma chamber. OES is a simple, nonintrusive, in-situ method, which can measure the emission intensity from various sources including atoms, radicals, and molecules.

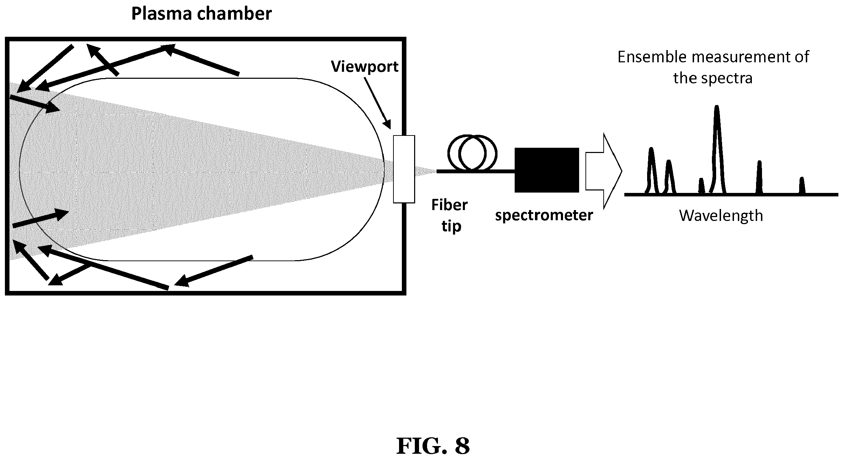

FIG. 8 shows schematically such OES for monitoring a plasma chamber through a viewport using a spectrometer. The emission intensity as a function of the wavelengths measured in the plasma may be obtained and the spectra may be analyzed, in order to understand the chemical content and concentration in the chamber during critical process steps.

However, OES provides only an ensemble measurement, and is in practice not capable of providing spatially resolved measurements. Some effort has been spent on improving the spatial resolution of OES systems, however, the solutions found require impractically long time to perform the measurements, due to their point-by-point scanning approach. Therefore, these solutions fail to provide an accurate dynamic measurement of the plasma content in practice, which is crucial to assessing the health of the plasma.

### SUMMARY OF THE INVENTION

In view of the above-mentioned disadvantages, embodiments of the present invention aim to improve the conventional solutions. An objective is to provide an advanced hyperspectral measurement apparatus and method, which are able to measure with enhanced spatial resolution, in particular three-dimensional spatial resolution. The apparatus and method should thereby be able to provide accurate dynamic measurements of e.g. a process chamber. The apparatus and method should require only short measurement times and should avoid scanning where possible.

The objective is achieved by the embodiments of the invention provided in the enclosed independent claims. Advantageous implementations of these embodiments are defined in the dependent claims.

The embodiments of the invention base on HSI. However, the inventors realized that standard HSI is too limited to provide a satisfactory solution.

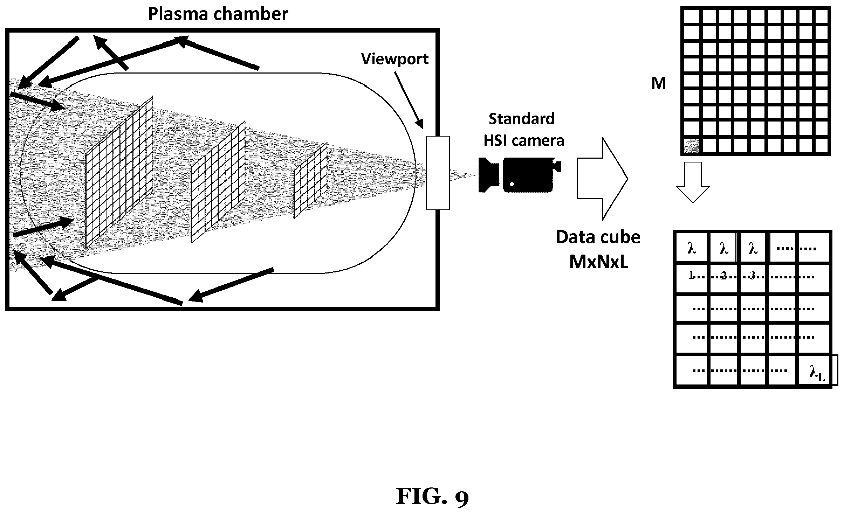

FIG. 9 shows standard HSI, when exemplarily used for monitoring a process chamber. A HSI camera may include an image sensor integrated with an array of hyperspectral filters on top. The HSI camera obtains hyperspectral images representing the inside of the process chamber, particularly obtains them through a chamber viewport. Each hyperspectral image is a 3D data cube with a resolution of MxNxL, wherein the data cube contains both spectral and spatial information. In particular, for each of MxN sensing units, e.g. sensor pixels or macro-pixels, of the HSI camera sensor (spatial resolution), L different monochromatic images are obtained (spectral resolution), wherein each image is particularly acquired at a narrow wavelength range of the electromagnetic spectrum (also known as a spectral band).

However, the standard HSI shown in FIG. 9 is only able to provide an averaged view into the process chamber, i.e. while the hyperspectral images may be resolved in two dimensions (chamber width and height), they are averaged over the third dimension (i.e. over the depth into the chamber). Depth corresponds to a certain distance from the HSI camera along the optical axis thereof. The obtained hyperspectral images are disadvantageously also blurred by in-chamber reflections. As a consequence of the above, with the standard HSI, the spatial resolution - in particular in the depth direction - is still too limited.

According to the above, a particular objective is to provide the apparatus and method with the ability to provide an enhanced depth resolution. Embodiments of the invention are to this end based on an advanced HSI system that provides spatial selectivity. The embodiments of the invention base on a HSI system (as shown in FIG. 9), but unlike that HSI system having customized optics to enable depth-resolution.

A first aspect of the invention provides an apparatus for depth-resolved HSI, the apparatus comprising an optical system configured to receive electromagnetic radiation and to: set at least one determined focus distance, block received out-of-focus radiation, and pass received in-focus radiation, and the apparatus comprising a HSI sensor configured to produce a hyperspectral image based on the in-focus radiation passed by the optical system.

Since the out-of-focus radiation is blocked, and the in-focus radiation is passed, the hyperspectral image obtained by the HSI sensor effectively images only points from a certain distance, i.e. from at or near the determined focus distance. In this way, spatial selectivity regarding the depth direction along the optical axis is provided. If, for instance, a plurality of different determined focus distances are set by the apparatus, depth-resolved hyperspectral imaging can be performed. The apparatus is thus well-suited for monitoring, for example, a process chamber. In particular, it is able to provide spectral information from different width, height and depth positions within the process chamber, and in a dynamic fashion.

A lateral spatial resolution achieved with the apparatus of the first aspect may be 200µm or lower (i.e. width and/or height resolution) and a longitudinal resolution may be 10mm or less (i.e. depth resolution)

In an implementation form of the apparatus, the optical system comprises at least one lens for setting the at least one determine focus distance.

To this end, the lens may, for instance, be moved with respect to the sensor. The optical system and sensor of the apparatus may use components from a standard HSI camera, e.g. to provide the capability of focusing.

In an implementation form of the apparatus, the optical system comprises an aperture mask configured to block the received out-of-focus radiation.

The aperture mask may comprise at least one aperture. This aperture may also be referred to as pinhole, and may be dimensioned and positioned such that it blocks out-of-focus radiation, and lets in-focus radiation pass. The aperture may work like a pinhole arranged in a conventional confocal microscope before the detector. That is, the aperture mask may be positioned such that the lens of the optical system focuses each point on the focal plane into the aperture/pinhole. That means a distance between the aperture mask and the lens is the same as the determined focus distance. In other words, the aperture mask and the plane at the determined focus distance (focal plane) are confocal.

In an alternative implementation form, instead of the aperture mask at least one compound parabolic concentrator (CPC) may be used to block the out-of-radiation and pass the in-focus radiation to the HSI sensor. That is, the CPC may provide the spatial filtering function. In particular, the CPC is configured to collimate radiation beams falling into its entrance aperture, and output a beam, of which it controls the angularity. For instance, the angularity of the output beam may be controlled to be <2.5°.

Since multiple lateral positions can be resolved at the same time by the apparatus, no lateral scanning is necessary.

In an implementation form of the apparatus, the aperture mask comprises a plurality of regularly arranged apertures, each aperture being configured to pass only received in-focus radiation.

Each aperture may act as a pinhole as described above. That is, the aperture mask may provide a multiple pinhole approach for blocking the out-of-focus radiation and passing the in-focus radiation, while allowing in total more light (a higher intensity of light) to pass through.

In an implementation form of the apparatus, the optical system comprises at least one optical element configured to provide the in-focus radiation passed by the aperture mask to the HSI sensor.

The at least one optical element may be an arrangement of one or more lenses functioning as relay optics. The at least one optical element may focus the radiation onto the sensor, or may disperse the radiation to cover the sensor.

In an implementation form of the apparatus, the optical system is configured to subsequently set a plurality of different determined focus distances, and the HSI sensor is configured to produce a plurality of hyperspectral images, wherein each hyperspectral image is produced based on the in-focus radiation passed by the optical system for a different one of the focus distances set by the optical system.

In this manner, the apparatus of the first aspect is able to produce multiple hyperspectral images, which provide depth-resolution. Since the multiple hyperspectral images can be obtained in short timeframe, the apparatus is for instance able to monitor a plasma in a process chamber in a high-throughput and dynamic fashion

In an implementation form, the apparatus is configured to acquire the plurality of hyperspectral images with an acquisition speed of 0.1-100 hyperspectral images per second, particularly at least one hyperspectral image per second.

Thus, a huge number of hyperspectral images can be taken in a very short time frame to provide a depth-resolution of 10 mm or less, e.g. over the whole depth of a process chamber, in a dynamic manner.

In an implementation form of the apparatus, the HSI sensor comprises a plurality of sensor units and a plurality of spectral filter units, each spectral filter unit being provided on one of the sensor units and being configured to pass a different sets of wavelengths in different spatial regions.

Thus, the HSI sensor is able to produce spatially resolved hyperspectral images, i.e. 3D hyperspectral cubes including multiple monochromatic images representing different specific narrowband wavelength information.

In an implementation form of the apparatus, each spectral filter unit is divided into a plurality of columns arranged in parallel, and is configured to pass a different set of wavelengths in each of the columns.

In an implementation form of the apparatus, each spectral filter unit is divided into a plurality of blocks arranged in a mosaic pattern, and is configured to pass a different set of wavelengths in each of the blocks.

In an implementation form, the apparatus further comprises a calibration unit for calibrating the received radiation and/or a processing unit for post-correcting a hyperspectral image produced based on the received radiation, particularly if the received radiation is transmitted through an optical window or viewpoint before it arrives at the apparatus.

In this way, the apparatus is well suited for process chambers having viewports or other optical windows.

A second aspect of the invention provides a method for depth-resolved HSI, the method comprising: operating an optical system for receiving electromagnetic radiation to: set a determined focus distance, block received out-of-focus radiation, and pass received in-focus radiation, and the method comprising: operating a HSI sensor to produce a hyperspectral image based on the in-focus radiation passed by the optical system.

In an implementation form, the method further comprises: operating the optical system to subsequently set a plurality of different determined focus distances, and operating the HSI sensor to produce a plurality of hyperspectral images, wherein each hyperspectral image is produced based on the in-focus radiation passed by the optical system for a different one of the focus distances set by operating the optical system.

In an implementation form, the method is performed to obtain a plurality of depth-resolved hyperspectral images from within a process chamber, wherein: each determined focus distance set by operating the optical system corresponds to a different depth-position in the process chamber, and each hyperspectral image produced by operating the HSI sensor resolves at least a part of a height and width of the process chamber.

In an implementation form, the method further comprises: obtaining radiometric measurement data of the electromagnetic radiation received from the process chamber based on the plurality of hyperspectral images

For instance, absolute photon counts, i.e. a radiance, may be obtained from the process chamber, e.g. from plasma emission. This may be achieved through performing a known method of radiometric calibration of the HSI sensor such that the digital numbers read from the HSI sensor can be converted to radiance units. This calibration is usually done once per system.

The method of the second aspect and its implementation forms achieve the same advantages as described above for the apparatus of the first aspect and its respective implementation forms.

In summary, embodiments (aspects and implementation forms) provide an apparatus and method configured for spatially resolved HSI, particularly also depth-resolved. The apparatus and method may be used to quantitatively assess, for example, a plasma process uniformity in a semiconductor manufacturing line. In particular, simultaneous measurements of spectral features at multiple spatial positions, for example in a process chamber, are possible. Thereby, the content of a plasma can be dynamically monitored at high speed and high sensitivity. The plasma radiation may be collected through an optical window situated on the process chamber, and thus the embodiments of the invention are compatible with conventional methods requiring no additional complexity on the tools.

### BRIEF DESCRIPTION OF THE DRAWINGS

The above described aspects and implementations are explained in the following description of embodiments with respect to the enclosed drawings:
- FIG. 1: shows an apparatus for depth-resolved HSI according to an embodiment of the invention.
- FIG. 2: shows an apparatus for depth-resolved HSI according to an embodiment of the invention used for monitoring a process chamber.
- FIG. 3: shows an apparatus for depth-resolved HSI according to an embodiment of the invention used for monitoring a process chamber.
- FIG. 4: shows a linescan architecture of the HSI sensor of the apparatus according to an embodiment of the invention.
- FIG. 5: shows a mosaic architecture of the HSI sensor of the apparatus according to an embodiment of the invention.
- FIG. 6: shows exemplary filter unit scenarios.
- FIG. 7: shows a method for depth-resolved HSI according to an embodiment of the invention.
- FIG. 8: shows conventional OES to monitor a process chamber.
- FIG. 9: shows a standard HSI approach to monitor a process chamber.

### DETAILED DESCRIPTION OF EMBODIMENTS OF THE INVENTION

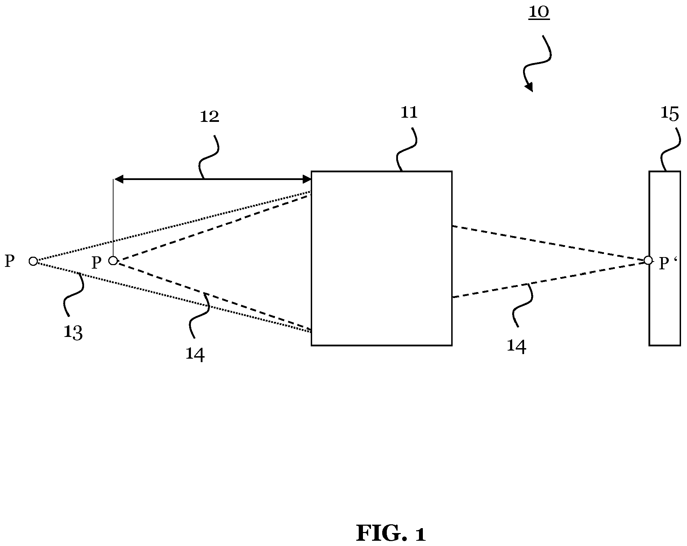

FIG. 1 shows schematically an apparatus 10 for performing depth-resolved HSI. The apparatus 10 can, for example, be used to monitor a process chamber, like a semiconductor processing plasma chamber, but is not limited thereto. Many other application scenarios are thinkable for using the depth-resolving HSI apparatus 10. Exemplary application scenarios include generally the monitoring of semiconductor tools for yield improvement, qualification, quality control etc. Further, spectroscopic imaging applications including chemical analysis emission spectroscopy flame, plasma arc, and/or spark, chemical analysis absorption spectroscopy, or laser-induced breakdown spectroscopy for biological and chemical applications are conceivable.

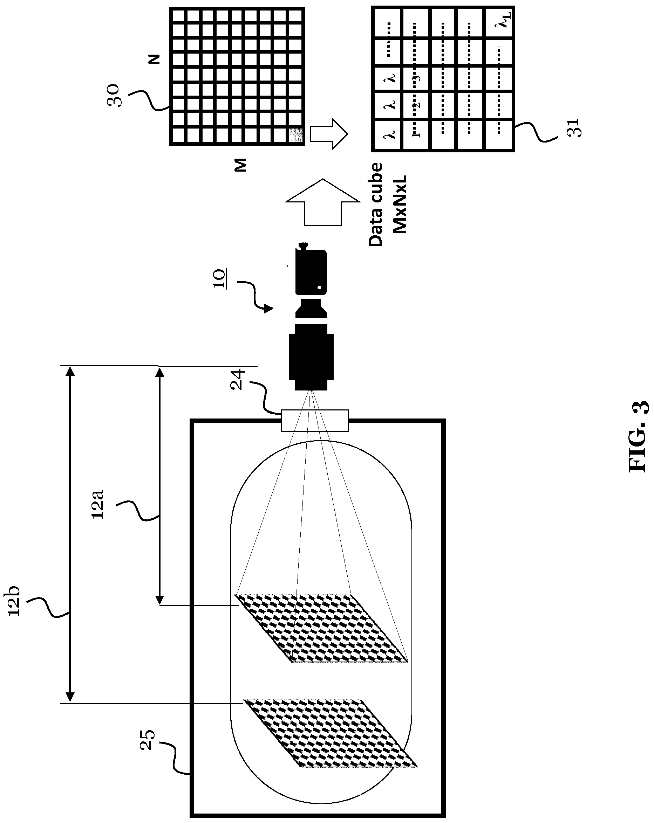

The apparatus 10 shown in FIG. 1 includes an optical system 11 configured to receive electromagnetic radiation, and includes a HSI sensor 15 configured to produce one or more hyperspectral images 30, 31 (see e.g. FIG. 3) based on the received electromagnetic radiation.

In particular, the optical system 11 is configured to set at least one determined focus distance 12, i.e. it may also set successively multiple different focus distances 12. Further, the optical system 11 is configured to block received out-of-focus radiation 13, and to pass received in-focus radiation 14, as schematically indicated by the dotted and dashed lines in FIG. 1, respectively. That means, depending on the set determined focus distance, the optical system 11 lets only radiation received from or near the focus distance (at or near the focal plane) reach the optical sensor 15. For instance, as shown in FIG. 1, radiation received from an in focus point P is passed by the optical system 11 and focused onto point P' on the sensor 15. However, out-of-focus radiation 13 received from substantially in front of or behind the determined focus distance is filtered out by the optical system 11. For instance, as shown in FIG. 1, radiation received from an out-of-focus point Q is blocked by the optical system 11.

The HSI sensor 15 accordingly receives only the in-focus radiation 14 that is passed by the optical system 11, and produces the one or more hyperspectral images 30, 31 based on the received in-focus-radiation 14. Accordingly, the produced one or more hyperspectral images corresponds to points in a 2D plane in a certain depth from the apparatus 10, namely the currently set determined focus distance 12.

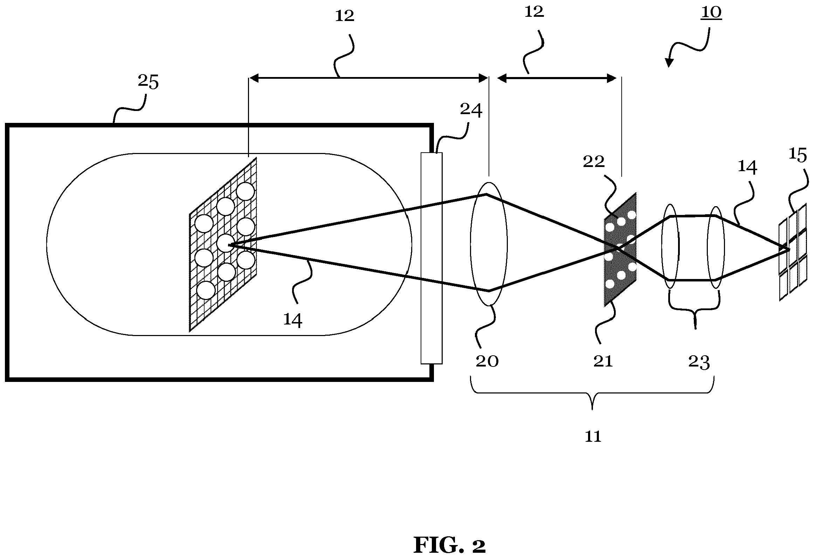

FIG. 2 shows an apparatus 10 according to an embodiment of the invention, which builds on the apparatus 10 shown in FIG. 1. Same elements in FIG. 1 and FIG. 2 share the same reference signs and function likewise. In particular, also the apparatus 10 shown in FIG. 2 includes the optical system 11 and the HSI sensor 15 for obtaining hyperspectral images 30, 31. The apparatus 10 shown in FIG. 2 is exemplarily used in the application scenario of monitoring a process chamber 25, in particular through an optical window 24.

The apparatus 10 of FIG. 2 includes in the optical system 11, at least one lens 20, an aperture mask 21, and at least one optical element 23. The at least one lens 20 is used for setting the at least one determined focus distance 12. The lens 20 is responsible for collecting radiation from the process chamber 25. The aperture mask 21 is arranged and configured to block received out-of-focus radiation 13, and to let through received in-focus radiation 14. In other words the aperture mask 21 provides the functions of spatial filtering and out-of-focus radiation rejection. The lens 20 may focus each in-focus point, i.e. at or near the determined focus distance, onto at least one aperture 22 of the aperture mask 22. That is, each aperture 22 of the aperture mask 21 functions as a pinhole that lets only focused radiation through.

The at least one optical element 23, in FIG. 2 particularly composed of two lenses, is used to provide the in-focus radiation 14 passed by the aperture mask 21 to the HSI sensor 15. That means that the at least one optical element 23 functions as a relay optics from the aperture mask 21 to the HSI sensor 15. Each in-focus point at or near the determined focus distance is focused onto a point on the sensor.

It can also be seen in FIG. 2 that the apertures mask 21 may comprise in particular a plurality of apertures 22, which are preferably arranged regularly on the aperture mask body, for instance in the form of a plate. Each aperture 22 is configured to pass in-focus-radiation 14. The multiple apertures 22 may provide spatial filtering, while providing reasonably high radiation intensity after the aperture mask 21.

In an example of the apparatus 10 of FIG. 2, the at least one lens 20 may be a f2.0 objective, the apertures 22 of the aperture mask 21 may be 40-60 µm, particularly 50 µm, wide pinholes (diameter). An angularity of the radiation before the relay optics 22 may be ±10-15°, particularly ±11°. An axial resolution, i.e. the resolution in the depth-direction, may be around 5 mm. A lateral resolution, i.e. in the width and height direction, may be 80-120 µm, particularly 100 µm.

FIG. 3 shows an apparatus 10 according to an embodiment of the invention, which builds on the apparatus 10 shown in FIG. 2. Again, only exemplarily, the apparatus 10 is used for monitoring a process chamber 25 through an optical window 24.

FIG. 3 shows in particular schematically that the optical system 11 is configured to set a plurality of different determined focus distances 12 (denoted in FIG. 3 as 12a and 12b). These different determined focus distances 12a and 12b may specifically be subsequently set by the apparatus 10 (i.e. its optical system 11). For each determined focus distance 12a and 12b, the HSI sensor 15 may be configured to produce at least one hyperspectral image 30, 31. For instance, for each determined distance 12a and 12b the HSI sensor 15 may produce one hyperspectral image, particularly based on the in-focus radiation 14 passed by the optical system 11 at that focus distance 12a or 12b. Thereby, depth resolution, in this case into the process chamber 25, is achieved.

FIG. 3 shows also that each hyperspectral image 30, 31 may be a 3D data cube with a resolution of MxNxL. Thereby, MxN may be the number of sensing units, e.g. pixels, macro-pixels, or groups of pixels, of the HSI sensor 15, and L may be a number of 2D-resolved images, each obtained at a different narrow wavelength band. That is, the hyperspectral image may include multiple monochromatic images, each monochromatic image corresponding to a different narrow wavelength range. By means of the out-of-focus rejection, multi-depth imaging is possible, which allows monitoring the process chamber 25 dynamically and with high speed. High-speed monitoring is particularly possible, because the apparatus 10 may be configured to obtain at least one hyperspectral image per second, or even with a faster acquisition time.

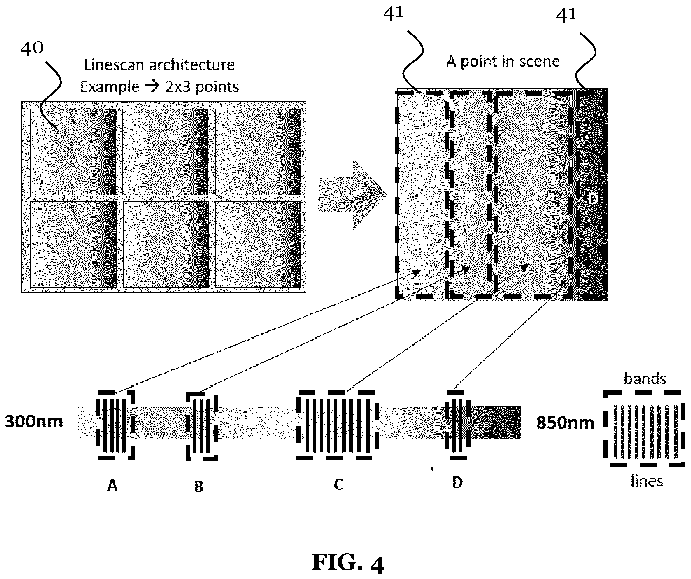

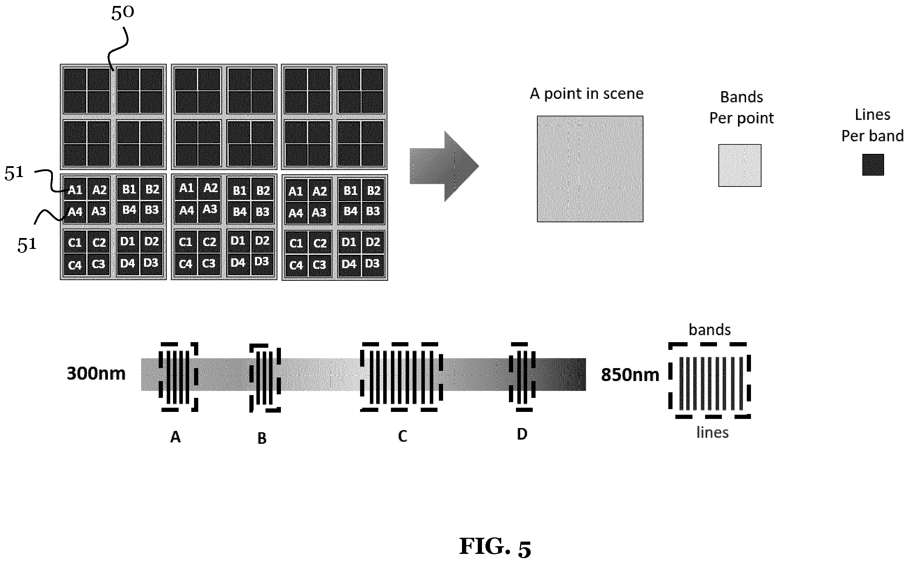

FIG. 4 and FIG. 5 show two ways to design the HSI sensor 15 for the apparatus 10 according to an embodiment of the present invention. In each case, the sensor 15 includes a plurality of sensor units, which may be composed by a group of sensor pixels, and may thus be regarded as macro-pixels. Further, a plurality of spectral filter units is provided, which may include spectral filters, e.g. interference filters like Fabry-Perot filters. Thereby, each spectral filter unit is provided on or in front of, i.e. is associated with, one of the sensor units. Each spectral filter unit is further configured to allow only a certain narrow wavelength range or a determined set of wavelengths to pass to the associated sensor unit, i.e. to the sensor pixels below. In particular, in different spatial regions of the spectral filter unit, different narrow wavelength ranges may be allowed to pass.

Specifically, FIG. 4 shows a HSI sensor 15 having linescan architecture, and FIG. 5 shows a HSI sensor 15 having a mosaic architecture. In the linescan architecture shown in FIG. 4, each spectral filter unit 40 (provided for a macro-pixel including multiple sensor pixels) is divided into a plurality of columns 41 ("lines"), which are arranged in parallel. Further, each spectral filter unit 40 is configured to pass a different set of wavelengths in each of the columns 41. For example, the spectral filter unit 40 may be divided into several columns A-D, wherein each column A-D passes a different set of wavelengths as indicated. Each set of wavelengths may include a number of spectral lines, and different spatial regions of each column A-D may pass different spectral lines.

In the mosaic architecture shown in FIG. 5, each spectral filter unit 50 is divided into a plurality of blocks 51, which are arranged in rows and/or columns, i.e. preferably in a mosaic pattern. Each spectral filter unit 50 is configured to pass a different set of wavelengths in each of the blocks 51 to the sensor pixels of the macro-pixel below. For instance, the spectral filter unit 50 may be divided into blocks A1-A4, B1-B4, C1-C4, D1-D4, wherein each block passes a different set of wavelengths or spectral line as indicated.

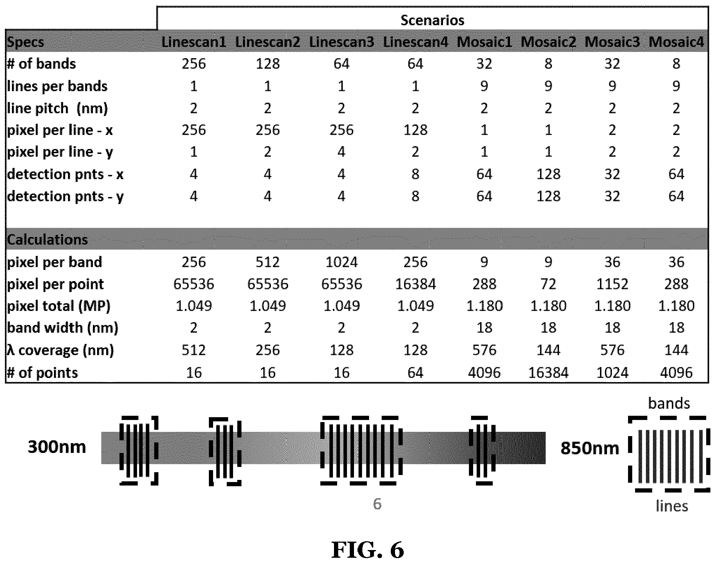

FIG. 6 shows an overview of different linescan and mosaic sensor scenarios. In particular, for each sensor scenario, parameters like the number of bands, lines per band, line pitch etc. are specified.

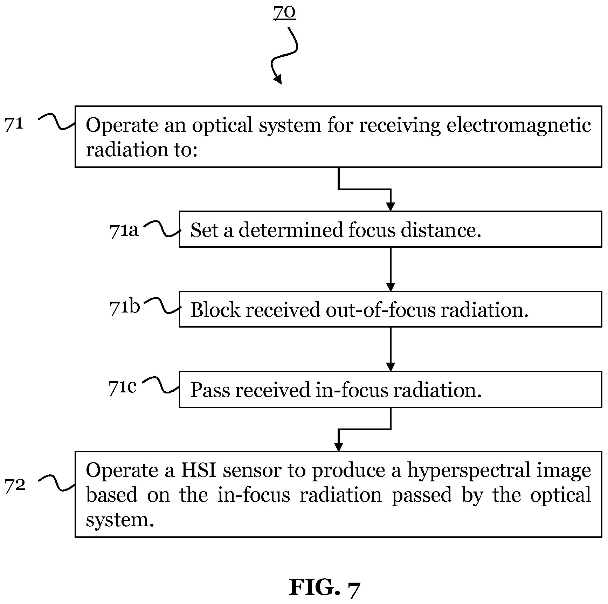

FIG. 7 shows a method 70 according to an embodiment of the invention. The method 70 provides depth-resolved HSI, and may be used for monitoring purposes, e.g. of a process chamber 25. The method 70 may be carried out by, or by using, the apparatus 10 according to any embodiment of the invention. The apparatus 10 may be as shown in FIG. 1-3.

The method 70 comprises a step 71 of operating an optical system 11 for receiving electromagnetic radiation. This step 71 may particularly include: setting 71a a determined focus distance 12, blocking 71b received out-of-focus radiation 13, and passing 71c received in-focus radiation 14. The method 70 further comprises a step 72 of operating a HSI sensor 15 to produce a hyperspectral image 30, 31 based on the in-focus radiation 14 passed by the optical system 11.

In summary, the embodiments of the invention enable depth-resolved HSI, and thus make new application scenarios feasible for HSI.

## Claims

1. Apparatus (10) for depth-resolved hyperspectral imaging, HSI, the apparatus (10) comprising:
an optical system (11) configured to receive electromagnetic radiation and to:
- set at least one determined focus distance (12),
- block received out-of-focus radiation (13), and
- pass received in-focus radiation (14),
a HSI sensor (15) configured to produce a hyperspectral image (30, 31) based on the in-focus radiation (14) passed by the optical system (11).

2. Apparatus (10) according to claim 1, wherein:
the optical system (11) comprises at least one lens (20) for setting the at least one determined focus distance (12).

3. Apparatus (10) according to claim 1 or 2, wherein:
the optical system (11) comprises an aperture mask (21) configured to block the received out-of-focus radiation (13).

4. Apparatus (10) according to claim 3, wherein:
the aperture mask (21) comprises a plurality of regularly arranged apertures (22), each aperture (22) being configured to pass only received in-focus radiation (14).

5. Apparatus (10) according to claim 3 or 4, wherein:
the optical system (11) comprises at least one optical element (23) configured to provide the in-focus radiation (14) passed by the aperture mask (21) to the HSI sensor (15).

6. Apparatus (10) according to one of the claims 1 to 5, wherein:
the optical system (11) is configured to subsequently set a plurality of different determined focus distances (12a, 12b), and
the HSI sensor (15) is configured to produce a plurality of hyperspectral images (30, 31),
wherein each hyperspectral image (30, 31) is produced based on the in-focus radiation (14) passed by the optical system (11) for a different one of the focus distances (12a, 12b) set by the optical system (11).

7. Apparatus (10) according to claim 6, configured to:
acquire the plurality of hyperspectral images (30, 31) with an acquisition speed of 0.1-100 hyperspectral images (301, 31) per second, particularly at least one hyperspectral image (30, 31) per second.

8. Apparatus (10) according to one of the claims 1 to 7, wherein:
the HSI sensor (15) comprises a plurality of sensor units and a plurality of spectral filter units (40, 50), each spectral filter unit (40, 50) being provided on one of the sensor units and being configured to pass a different sets of wavelengths in different spatial regions.

9. Apparatus (10) according to one of the claims 1 to 8, wherein:
each spectral filter unit (40) is divided into a plurality of columns (41) arranged in parallel, and is configured to pass a different set of wavelengths in each of the columns (41).

10. Apparatus (10) according to one of the claims 1 to 8, wherein:
each spectral filter unit (50) is divided into a plurality of blocks (51) arranged in a mosaic pattern, and is configured to pass a different set of wavelengths in each of the blocks (51).

11. Apparatus (10) according to one of the claims 1 to 10, further comprising:
a calibration unit for calibrating the received radiation and/or a processing unit for post-correcting a hyperspectral image (30, 31) produced based on the received radiation, particularly if the received radiation is transmitted through an optical window or viewpoint (24) before it arrives at the apparatus (10).

12. Method (70) for depth-resolved hyperspectral imaging, HSI, the method (70) comprising:
operating (71) an optical system (11) for receiving electromagnetic radiation to:
- set (71a) a determined focus distance (12),
- block (71b) received out-of-focus radiation (13), and
- pass (71c) received in-focus radiation (14),
operating (72) a HSI sensor (15) to produce a hyperspectral image (30, 31) based on the in-focus radiation (14) passed by the optical system (11).

13. Method (70) according to claim 12, comprising:
operating (71) the optical system (11) to subsequently set a plurality of different determined focus distances (12a, 12b), and
operating (72) the HSI sensor (15) to produce a plurality of hyperspectral images (30, 31),
wherein each hyperspectral image (30, 31) is produced based on the in-focus radiation (14) passed by the optical system (11) for a different one of the focus distances (12a, 12b) set by operating the optical system (11).

14. Method (70) according to claim 13 performed to obtain a plurality of depth-resolved hyperspectral images (30, 31) from within a process chamber (25), wherein:
each determined focus distance (12a, 12b) set by operating (71) the optical system (11) corresponds to a different depth-position in the process chamber (25), and
each hyperspectral image (30, 31) produced by operating (72) the HSI sensor (15) resolves at least a part of a height and width of the process chamber (25).

15. Method (70) according to claim 14, further comprising:
obtaining radiometric measurement data of the electromagnetic radiation received from the process chamber (25) based on the plurality of hyperspectral images (30, 31).
